# EUROPÄISCHE PATENTANMELDUNG

(11) **EP 2 078 913 A1**
(43) Veröffentlichungstag der Anmeldung: **15.07.2009**
(21) Anmeldenummer: 09450002.2
(22) Anmeldetag: 07.01.2009
(51) Int. Cl.: F28F 9/013, F24J 2/05, F24J 2/24, F24J 2/34, F28D 1/047, F28D 7/08, F28D 15/00, F28D 20/00

(54) **Wärmetauscher**

(30) Priorität: 14.01.2008 AT 502008
(71) Anmelder: Augl, Joachim, 4694 Ohlsdorf (AT)
(72) Erfinder: Augl, Joachim, 4694 Ohlsdorf (AT)
(74) Vertreter: Hübscher, Helmut

(57) **Zusammenfassung**

Es wird ein Wärmetauscher mit einem stehenden Gehäuse (1), mit einer mehrere schraubenförmige Windungen (7) bildenden Leitung (8) für einen Wärmeträger und mit einer die zur Gehäuseachse koaxialen Windungen (7) in einem gegenseitigen axialen Abstand aufnehmenden Halterung beschrieben. Um vorteilhafte Konstruktionsverhältnisse zu schaffen, wird vorgeschlagen, dass die Halterung einen von den Leitungswindungen (7) umschlossenen, im Wesentlichen prismatischen Stützkörper (6) bildet, der im Kantenbereich Aussparungen (9) zur Aufnahme der Leitungswindungen (7) aufweist, und dass der zylindrische Mantel (3) des Gehäuses (1) lichtdurchlässig ausgebildet ist.

## Beschreibung

Die Erfindung bezieht sich auf einen Wärmetauscher mit einem stehenden Gehäuse, mit einer mehrere schraubenförmige Windungen bildenden Leitung für einen Wärmeträger und mit einer die zur Gehäuseachse koaxialen Windungen in einem gegenseitigen axialen Abstand aufnehmenden Halterung.

Um Sonnenenergie für die Wärmegewinnung nützen zu können, sind Sonnenkollektoren in unterschiedlichen Bauarten bekannt, die im Allgemeinen ein flaches, kastenförmiges Gehäuse mit zwischen einer lichtdurchlässigen Abdeckung und einem Reflektor angeordneten, parallelen Rohrsträngen aufweisen, die an eine Verteiler- und eine Sammelleitung für einen Wärmeträger, üblicherweise Wasser, angeschlossen sind. Abgesehen davon, dass der Platzbedarf für diese bekannten Sonnenkollektoren erheblich ist, hängt die Energieaufnahme maßgeblich vom Einfallswinkel der Sonnenstrahlen ab, was eine Ausrichtung der flachen, kastenförmigen Gehäuse zumindest gegenüber einem bevorzugten Sonnenstand erforderlich macht und damit die freie Aufstellung solcher Sonnenkollektoren beispielsweise im Gartenbereich zusätzlich erschwert.

Zur Erwärmung von Brauchwasser im Wärmeaustausch mit einem Wärmeträger werden Brauchwasserspeicher eingesetzt, die einen Behälter mit einer Wärmeträgerleitung umfassen, die in mehreren schraubenförmigen Windungen koaxial zur Behälterachse verlegt ist und aus einem biegeweichen Schlauch gebildet wird, sodass die Leitungswindungen in einem vorgegebenen Abstand auf einem zylindrischen Gitterträger als Halterung befestigt und mit diesem Gitterträger in den Behälter eingesetzt werden. Durch diese Maßnahme ergibt sich zwar eine einfache Konstruktion des Wärmetauschers für den Brauchwasserspeicher, doch ist ein solcher Wärmetauscher für den Einsatz als Sonnenkollektor ungeeignet.

Der Erfindung liegt somit die Aufgabe zugrunde, einen für den Einsatz als Sonnenkollektor geeigneten Wärmetauscher zu schaffen, der einen vergleichsweise geringen Platz benötigt und vorteilhaft frei aufgestellt werden kann.

Die Erfindung löst die gestellte Aufgabe dadurch, dass die Halterung einen von den Leitungswindungen umschlossenen, im Wesentlichen prismatischen Stützkörper bildet, der im Kantenbereich Aussparungen zur Aufnahme der Leitungswindungen aufweist, und dass der zylindrische Mantel des Gehäuses lichtdurchlässig ausgebildet ist.

Die Halterung für die Windungen der Wärmeträgerleitung in Form eines prismatischen Stützköpers mit in den Eckbereichen vorgesehenen Aussparungen zur Aufnahme der Leitungswindungen stellt nicht nur eine einfache, optisch ansprechende Konstruktion dar, sondern macht auch die Aufstellung des Wärmetauschers im Freien von einer bestimmten Ausrichtung gegenüber einem Sonnenstand unabhängig, weil aufgrund des zylindrischen, lichtdurchlässigen Gehäusemantels und der in diesem Gehäusemantel durch den Stützkörper koaxial gehaltenen Leitungswindungen diese im sonnenbeschienenen Umfangsabschnitt in vorteilhafter Weise der Wärmestrahlung des Sonnenlichts ausgesetzt sind. Mit einem den zylindrischen Mantel in einem entsprechenden Abstand auf der der Sonne abgewandten Seite angeordneten Reflektor kann die Wärmestrahlung in an sich bekannter Art auch auf der Schattenseite des Gehäuses dem Wärmetauscher zugeführt werden.

Obwohl hinsichtlich der Grundfläche unterschiedliche, vorzugsweise gleichseitige Prismenformen für den Stützkörper eingesetzt werden können, ergeben sich besonders vorteilhafte Konstruktionsbedingungen, wenn der Stützkörper eine im Wesentlichen quadratische Querschnittsform aufweist, weil sich in diesem Fall die Aussparungen zur Aufnahme der Leitungswindungen auf den unmittelbaren Eckbereich des Stützkörpers beschränken können, sodass außerhalb der Eckbereiche die Leitungswindungen im Wesentlichen frei verlaufen und der Raum zwischen dem Stützkörper und dem Gehäusemantel vorteilhaft für die Führung der Wärmeträgerleitung genützt werden kann.

Ist der wärmedämmend ausgeführte Stützkörper hohl ausgebildet und nimmt er in seinem Hohlraum einen von einem Anschlussstrang der Leitungswindungen durchsetzten Wärmespeicherkern auf, so kann in diesem Wärmespeicherkern überschüssige Wärmeenergie gespeichert und im Bedarfsfall wieder genützt werden. Der Stützkörper verhindert dabei aufgrund seiner Wärmedämmeigenschaften eine vorzeitige Wärmeabgabe.

Der erfindungsgemäße Wärmetauscher kann auch im Wärmeaustausch mit Luft als Wärmequelle oder Kältemittel betrieben werden. Zu diesem Zweck braucht lediglich der Stützkörper achsparallele Durchgangsöffnungen mit über deren Länge verteilten, auf der Außenseite des Stützkörpers mündenden Anschlussöffnungen versehen zu werden, wobei der Raum zwischen dem Stützkörper und dem Gehäusemantel einerseits und die Durchgangsöffnungen anderseits an Anschlussleitungen für eine Luftzu- und -abfuhr angeschlossen werden, sodass entweder Luft zur Erwärmung oder zur Kühlung des Wärmeträgers in den Leitungswindungen durch den die Leitungswindungen aufnehmenden Raum des Gehäuses gefördert werden kann. Besonders vorteilhafte Konstruktionsbedingungen ergeben sich in diesem Zusammenhang, wenn die Durchgangsöffnungen in einen mit einer Anschlussleitung für die Luftzu- oder - abfuhr versehenen Raum unterhalb des Stützkörpers münden. Es entfallen nämlich bei einer solchen Ausführungsform gesonderte Anschlussleitungen für die Durchgangsöffnungen im Stützkörper. Ragen in die Durchgangsöffnungen des Stützkörpers an einen wärmeleitfähigen Gehäusedeckel angeschlossene, wärmeleitende Einsätze, so kann je nach der Betriebsart des Wärmetauschers dem Luftstrom durch die Durchgangsöffnungen zusätzlich äußere Wärme zugeführt oder Wärme aus diesem Luftstrom an die Umgebung abgegeben werden.

In der Zeichnung ist der Erfindungsgegenstand beispielsweise dargestellt. Es zeigen
- Fig. 1: einen erfindungsgemäßen Wärmetauscher in einer vereinfachten, zum Teil aufgerissenen Draufsicht ohne Gehäusedeckel,
- Fig. 2: diesen Wärmetauscher in einem Axialschnitt nach der Linie II-II der Fig. 1 und
- Fig. 3: einen Schnitt nach der Linie III-III der Fig. 1.

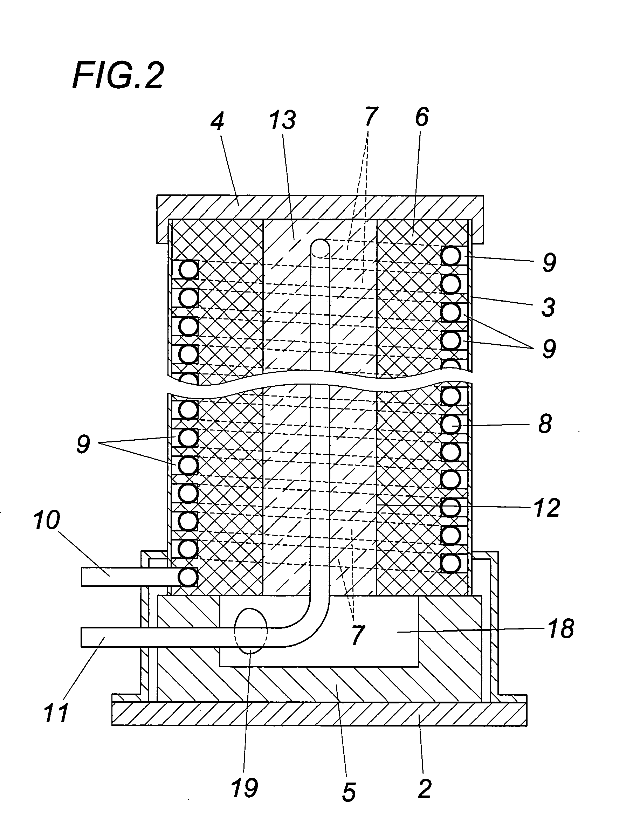

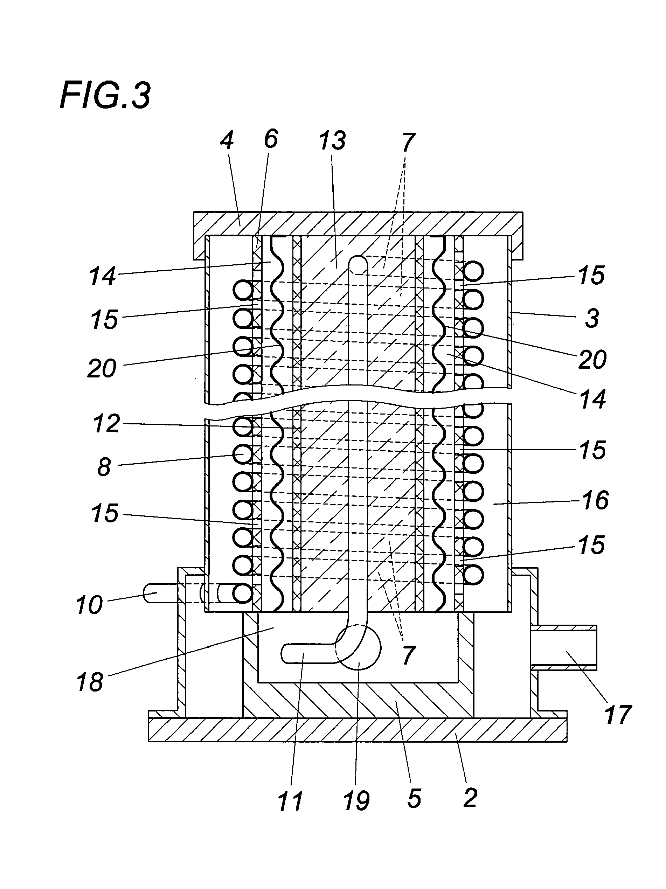

Der dargestellte Wärmetauscher weist ein Gehäuse 1 auf, das einen auf einer Grundplatte 2 aufgebauten Sockel 3 und einen aus diesem Sockel 3 aufragenden, zylindrischen, lichtdurchlässigen Mantel 3 umfasst, der oben durch einen metallischen Deckel 4 abgeschlossen ist. Innerhalb des Sockels 3 ist auf der Grundplatte 2 ein in seiner Grundrissform quadratischer Einsatz 5 gelagert, auf dem im Eckbereich der Gehäusemantel 3 abgestützt ist. Der Einsatz 5 trägt außerdem einen Stützkörper 6 aus einem wärmedämmenden Werkstoff, beispielsweise aus Schaumstoff, für eine in mehreren Windungen 7 verlegte Leitung 8 für einen Wärmeträger, vorzugsweise Wasser. Zu diesem Zweck ist der im Querschnitt quadratisch ausgebildete, prismatische Stützkörper 6 im Bereich seiner Ecken mit Aussparungen 9 zur Aufnahme der einzelnen Leitungswindungen 7 versehen. Die Anschlussstränge für die Leitungswindungen 7 sind mit 10 und 11 bezeichnet. Wie insbesondere den Fig. 2 und 3 entnommen werden kann, ist der an die oberste Windung 7 angeschlossene Anschlussstrang 11 koaxial zu den Leitungswindungen 7 durch einen Hohlraum 12 des Stützkörpers 6 geführt und durchsetzt einen den Hohlraum 12 ausfüllenden Wärmespeicherkern 13, der z. B. aus einem Betonkörper bestehen kann. Mit Hilfe der Wärmestrahlung des Sonnenlichtes kann somit der Wärmeträger in den Leitungswindungen 7 durch den lichtdurchlässigen Mantel 3 des Gehäuses erwärmt werden, wobei Überschusswärme im Wärmespeicherkern 13 gespeichert werden kann.

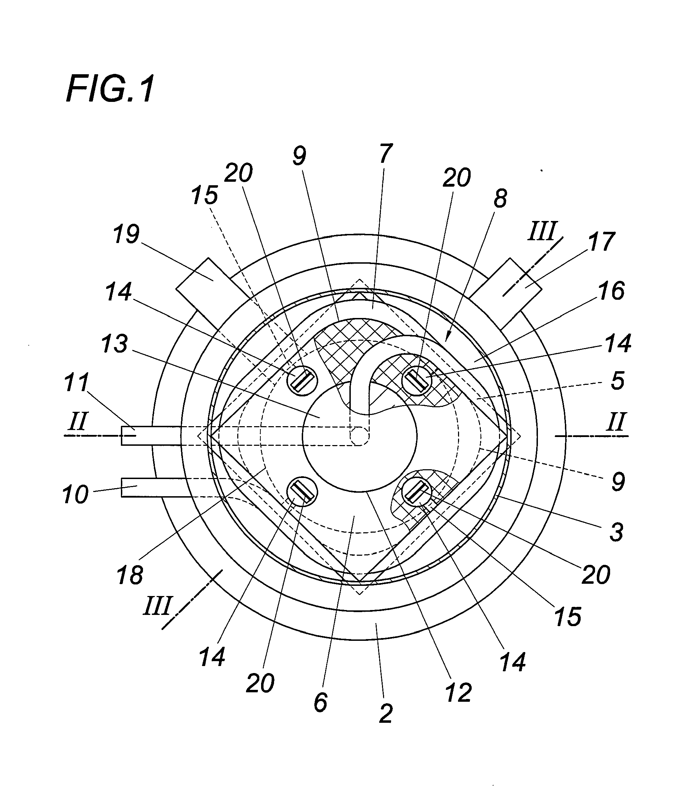

Gemäß den Fig. 1 und 3 weist der Stützkörper 6 den einzelnen Seiten des durch den Stützkörper 6 gebildeten Prismas zugeordnete, achsparallele Durchgangsöffnungen 14 auf, die mit auf der Außenseite des Stützkörpers 6 mündenden Anschlussöffnungen 15 versehen sind. Der mit dem Sockel 3 in Strömungsverbindung stehende Raum 16 zwischen dem Gehäusemantel 3 und dem Stützkörper 6 ist über den Sockel 3 an eine Anschlussleitung 17 für die Luftzu- oder -abfuhr verbunden. Die Durchgangsöffnungen 14 münden in einem Raum 18, der sich durch eine topfartige Ausnehmung im Einsatz 5 ergibt. Dieser Raum 18 ist an eine Anschlussleitung 19 angebunden, die je nach der Strömungsführung der Luft zur Luftzu- oder -abfuhr dient, sodass Luft zur Wärmezu- oder abfuhr durch den Raum 16 zwischen Gehäusemantel 3 und Stützkörper 6 über die Durchgangsöffnungen 14 gefördert werden kann. Der durch die Leitungswindungen 7 strömende Wärmeträger kann demnach zusätzlich durch Luft erwärmt oder gekühlt werden, die über die Anschlussleitungen 17 und 19 zu- und abgeführt wird. Damit die durch die Durchgangsöffnungen 14 strömende Luft zusätzlich erwärmt oder allenfalls gekühlt werden kann, ragen am metallischen Deckel 4 befestigte wärmeleitende Einsätze 20 in die Durchgangsöffnungen 14, sodass durch den wärmeleitfähigen Deckel 4 des Gehäuses 1 aufgenommene Wärme über diese Einsätze 20 an die die Durchgangsöffnungen 14 durchströmende Luft abgegeben oder von dieser Luft durch die Einsätze 20 aufgenommene Wärme über den Deckel 4 an die Umgebung abgeführt werden kann.

## Patentansprüche

1. Wärmetauscher mit einem stehenden Gehäuse (1), mit einer mehrere schraubenförmige Windungen (7) bildenden Leitung (8) für einen Wärmeträger und mit einer die zur Gehäuseachse koaxialen Windungen (7) in einem gegenseitigen axialen Abstand aufnehmenden Halterung, **dadurch gekennzeichnet, dass** die Halterung einen von den Leitungswindungen (7) umschlossenen, im Wesentlichen prismatischen Stützkörper (6) bildet, der im Kantenbereich Aussparungen (9) zur Aufnahme der Leitungswindungen (7) aufweist, und dass der zylindrische Mantel (3) des Gehäuses (1) lichtdurchlässig ausgebildet ist.

2. Wärmetauscher nach Anspruch 1, **dadurch gekennzeichnet, dass** der Stützkörper (6) eine im Wesentlichen quadratische Querschnittsform aufweist.

3. Wärmetauscher nach Anspruch 1 oder 2, **dadurch gekennzeichnet, dass** der wärmedämmend ausgeführte Stützkörper (6) hohl ausgebildet ist und in seinem Hohlraum (12) einen von einem Anschlussstrang (11) der Leitungswindungen (7) durchsetzten Wärmespeicherkern (13) aufnimmt.

4. Wärmetauscher nach einem der Ansprüche 1 bis 3, **dadurch gekennzeichnet, dass** der Stützkörper (6) achsparallele Durchgangsöffnungen (14) mit über deren Länge verteilten, auf der Außenseite des Stützkörpers (6) mündenden Anschlussöffnungen (15) aufweist und dass der Raum (16) zwischen dem Stützkörper (6) und dem Gehäusemantel (3) einerseits und die Durchgangsöffnungen (14) anderseits an Anschlussleitungen (17, 19) für eine Luftzu- und - abfuhr angeschlossen sind.

5. Wärmetauscher nach Anspruch 4, **dadurch gekennzeichnet, dass** die Durchgangsöffnungen (14) in einen mit einer Anschlussleitung (19) für die Luftzu- oder -abfuhr versehenen Raum (18) unterhalb des Stützkörpers (6) münden.

6. Wärmetauscher nach Anspruch 4 oder 5, **dadurch gekennzeichnet, dass** in die Durchgangsöffnungen (14) des Stützkörpers (6) an einen wärmeleitfähigen Gehäusedeckel (4) angeschlossene, wärmeleitende Einsätze (20) ragen.
